# EUROPÄISCHE PATENTANMELDUNG

(11) **EP 0 665 130 A1**
(43) Veröffentlichungstag der Anmeldung: **02.08.1995**
(21) Anmeldenummer: 95100641.0
(22) Anmeldetag: 19.01.1995
(51) Int. Cl.: B60K 25/02, B60K 17/28, F16D 9/08, A01B 71/06, F16H 3/00

(54) **Zapfwellenanordnung**

(30) Priorität: 31.01.1994 US 189216
(71) Anmelder: DEERE & COMPANY, Moline, Illinois 61265 (US)
(72) Erfinder: Tjepkes, Kendall Dean, Dike, Iowa 50624 (US); Bowman, Dennis Aaron, Cedar Falls, Iowa 50613 (US)
(74) Vertreter: Feldmann, Bernhard

(57) **Zusammenfassung**

Es wird eine Zapfwellenanordnung vorgeschlagen, die ein Ausgangsantriebsteil (46) enthält, welches bei verschiedenen Drehzahlen und unterschiedlichen Leistungsniveaus antreibbar ist. Eine Ausgangswelle (102) ist mit dem Ausgangsantriebsteil (46) kuppelbar. Eine hohle, zylindrische Antriebshülse (122) enthält an einem ersten Ende einen ersten Verzahnungskranz (124), der mit einer entsprechenden Verzahnung (118, 120) der Ausgangswelle (102) in Eingriff bringbar ist. An dem anderen Ende befindet sich ein zweiter Verzahnungskranz (126), der mit einer entsprechenden Verzahnung (50) des Ausgangsantriebsteils (46) in Eingriff bringbar ist. Die Antriebswelle (102) weist ferner zwischen den beiden Enden eine Sollbruchstelle auf. Diese ist vorzugsweise als mittlerer Halsbereich (128) ausgebildet. Die Sollbruchstelle bzw. der Halsbereich (128) ist derart ausgebildet, daß infolge akkumulierender Drehmomentbeschädigungen die Antriebshülse (122) an der Sollbruchstelle oder im Halsbereich (128) auseinanderbricht und somit eine weitere Drehmomentübertragung an die Ausgangswelle (102) verhindert wird. Infolge ihrer Auslegung bricht die Antriebshülse (122) vor einem zu erwartenden Bruch der Welle (102). Die Ausgangswelle (102) wird von einer an dem Fahrzeug befestigbaren Lageranordnung (108) drehbar getragen.

## Beschreibung

Die Erfindung betrifft eine Zapfwellenanordnung für ein landwirtschaftliches oder anderes Arbeitsfahrzeug mit einem bei unterschiedlichen Drehzahlen und Leistungsniveaus antreibbaren Ausgangsantriebsteil, an welches eine Ausgangswelle kuppelbar ist.

Landwirtschaftliche Traktoren mit hoher Leistung (über 155 PS) werden üblicherweise mit lediglich einer Zapfwelle ausgerüstet, die einen Durchmesser von 1 3/4 Zoll aufweist und für eine Drehzahl von 1000 U/min vorgesehen ist. Die kleineren Zapfwellen mit einem Durchmesser von 1 3/8 Zoll, die für Drehzahlen von 540 und 1000 U/min vorgesehen sind, werden für diese Traktoren nicht bereitgestellt, da sie zu schwach ausgelegt sind, um die volle Ausgangsleistung zu übertragen. Allerdings sind Anbaugeräte mit 1 3/8 Zoll Zapfwellen weit verbreitet. Um diese Anbaugeräte verwenden zu können, wird bisher entweder ein an die Ausgangswelle des Traktors anschellbarer Adapter verwendet oder es wird der Antriebsanschluß des Anbaugerätes an die Zapfwelle des großen Traktors angepaßt. Die angeschellte, auf eine Verzahnung für die Standarddrehzahl von 540 U/min angepaßte Welle muß jedoch bei einer verminderten Motordrehzahl betrieben werden, um die richtige Zapfwellendrehzahl zu liefern. Eine verminderte Motordrehzahl ist für einen Betrieb, der sowohl hohe Zugkräfte an der Zugvorrichtung als auch einen Zapfwellenbetrieb - verlangt, nicht akzeptabel. Es sind auch einige Getriebe zur Reduzierung der Leistung bekannt, durch die sich die Ausgangsdrehzahl anpassen läßt. Diese Getriebe sind jedoch teuer, erfordern für den Hochleistungsbetrieb externe Kühlölleitungen und erfüllen nicht die geltenden Richtlinien für die Lage der Kupplungspunkte der Anbaugeräte.

Einige serienmäßige Traktoren enthalten einen Zapfwellenmechanismus mit einem Drehzahlumschaltgetriebe, welches in Abhängigkeit davon, welches Ende eines zweiseitigen Zapfwellenstummels in den Zapfwellenmechanismus eingesteckt ist, umschaltbar ist. Die Konstruktion, die das Anschellen einer Zapfwelle mit einer Verzahnung sowohl für 540 U/min als auch für 1000 U/min erlaubt, schließt es nicht aus, daß die volle Leistung auch auf Zapfwellen mit einem Durchmesser, der kleiner als 1 3/8 Zoll ist, übertragen wird. Daher kann diese Zapfwelle frühzeitig versagen.

Eine Änderung des Antriebsanschlusses des Anbaugerätes, durch die eine Anpassung an den Traktor erfolgt, ist teuer, kompliziert und zeitaufwendig. Wenn überdies ein hohes Drehmoment an die Welle oder das Anbaugerät, das hierfür nicht ausgelegt ist, angelegt wird, können Teile brechen und gefahrvolle Situationen auftreten. Enthielte die Vorrichtung jedoch Maßnahmen zur Begrenzung des maximal übertragbaren Drehmomentlevels, so wäre dies für die Kunden nicht akzeptabel. Die Verwendung einer Kupplung, die die Drehmomentübertragung oberhalb der Ermüdungsgrenze der Welle verhindert, führt zu einer Einrichtung, die sehr häufig abschaltet und die Bedienungsperson frustriert.

Die der Erfindung zugrunde liegende Aufgabe wird darin gesehen, eine Zapfwellenanordnung der eingangs genannten Art anzugeben, durch die die genannten Probleme vermieden bzw. überwunden werden. Insbesondere soll die Zapfwellenanordnung einen schnellen und leichten Übergang zwischen verschiedenen Betriebsdrehzahlen mit zugehörigen Zapfwellenabmessungen ermöglichen. Ferner soll der Zapfwellenmechanismus auf kontrollierte Weise ausfallen, wenn zu hohe Drehmomente übertragen werden.

Die Aufgabe wird erfindungsgemäß durch die Lehre des Patentanspruchs 1 gelost. Weitere vorteilhafte Ausgestaltungen und Weiterbildungen der Erfindung gehen aus den Unteransprüchen hervor.

Die erfindungsgemäße Zapfwellenanordnung enthält ein Ausgangsantriebsteil, welches bei verschiedenen Drehzahlen und unterschiedlichen Leistungsniveaus antreibbar ist, und eine Ausgangswelle, die mit dem Ausgangsantriebsteil kuppelbar ist. Eine hohle, zylindrische Antriebshülse enthält ein erstes Ende mit einem ersten Verzahnungskranz, der mit einer entsprechenden Verzahnung der Ausgangswelle in Eingriff bringbar ist, und ein zweites Ende mit einem zweiten Verzahnungskranz, der mit einer entsprechenden Verzahnung des Ausgangsantriebsteils in Eingriff bringbar ist. Die Antriebswelle weist ferner zwischen den beiden Enden eine Sollbruchstelle auf. Diese ist vorzugsweise als mittlerer Halsbereich ausgebildet. Die Sollbruchstelle bzw. der Halsbereich ist derart ausgebildet, daß infolge akkumulierender Drehmomentbeschädigungen die Antriebshülse an der Sollbruchstelle oder im Halsbereich auseinanderbricht und somit eine weitere Drehmomentübertragung an die Ausgangswelle verhindert wird. Infolge ihrer Auslegung kann die Antriebshülse vor der Welle brechen. Eine an dem Fahrzeug befestigbare Lageranordnung trägt drehbar die Ausgangswelle.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen Teil der Querschnittsdarstellung eines Zapfwellenmechanismus gemäß dem Stand der Technik, bei dem die vorliegende Erfindung Anwendung finden kann,
- Fig. 2: eine teilweise im Querschnitt dargestellte Zapfwellenanordnung mit beidseitigem Zapfwellenanschluß gemäß vorliegender Erfindung,
- Fig. 3: eine vergrößerte Ansicht der in Fig. 2 dargestellten Kupplungshülse,
- Fig. 4: eine Schnittdarstellung der Kupplungshülse entlang der in Fig. 3 gezeigten Linie 4 - 4 und

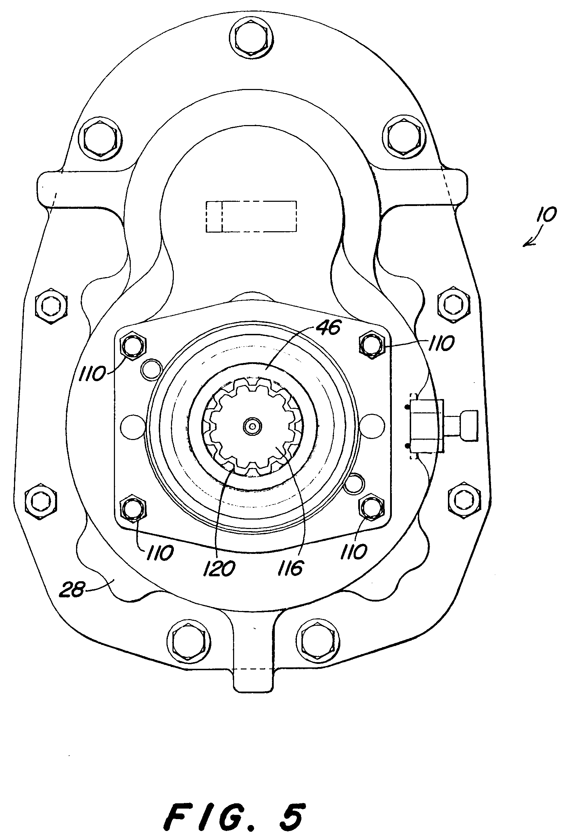

- Fig. 5: die Stirnansicht der in Fig. 2 dargestellten Zapfwellenanordnung, die an der in Fig. 1 gezeigten Bauanordnung angebaut ist.

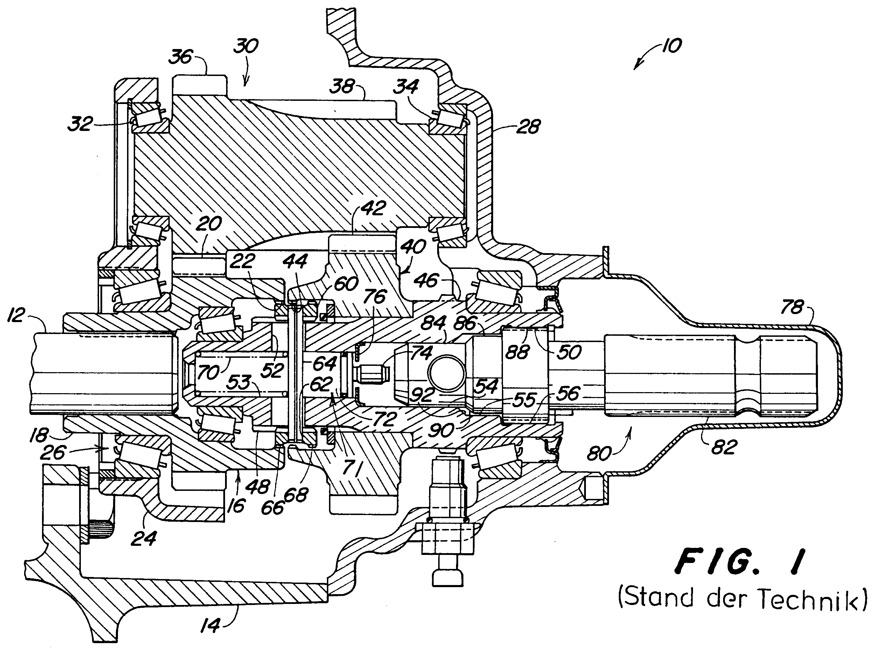

Aus Fig. 1 geht ein serienmäßig hergestellter Zapfwellenmechanismus 10 gemäß dem Stand der Technik hervor, der mit einer verzahnten durch einen Motor angetriebenen Welle 12 in Verbindung steht. Die Welle 12 ragt aus dem Rahmenteil 14 eines nicht näher dargestellten landwirtschaftlichen oder industriellen Traktors heraus. Ein Eingangszahnrad 16 enthält eine mit der Welle 12 verzahnte Nabe 18, eine im mittleren Bereich angeordnete Zahnreihe oder Verzahnung 20 und eine an einem Ende radial nach innen gerichtete Zahnreihe oder Verzahnung 22. An der Nabe 18 ist über ein Lager 26 ein Trägergehäuse 24 befestigt. An dem nicht dargestellten Rahmen oder Gehäuseteil des Traktors ist ein Ausgangsgehäuse 28 befestigt. Das Trägergehäuse 24 ist auch über nicht gezeigte Schrauben an dem Ausgangsgehäuse 28 befestigt. Ein Nebenwellengetriebeteil 30 ist über ein Lager 32 in dem Trägergehäuse 24 und über ein weiteres Lager 34 in dem Ausgangsgehäuse 28 gelagert. Das Nebenwellengetriebeteil 30 enthält eine Verzahnung 36 mit großem Durchmesser, die mit der mittleren Verzahnung 20 des Eingangszahnrades 16 kämmt, und eine Verzahnung 38 mit kleinem Durchmesser. Ein Ausgangsantriebszahnrad 40 enthält einen äußeren Zahnkranz 42, welcher mit der Verzahnung 38 des Nebenwellengetriebeteils 30 kämmt, sowie einen inneren Zahnkranz 44.

Eine mittlere axiale Bohrung des Ausgangsantriebszahnrades 40 nimmt eine hohle Hülse 46 drehbar auf. Ein ins Innere des Zapfwellenmechanismus 10 weisender Bereich der Hülse 46 enthält eine Außenverzahnung 48, und ein aus dem Zapfwellengehäuse 10 herausweisendes Ende der Hülse 46 enthält eine Innenverzahnung 50. Durch den nach innen weisenden Bereich der Hülse 46 erstreckt sich eine radiale Querbohrung 52. Das Innere der Hülse 46 wird durch eine nach innen weisende Bohrung 53 mit kleinem Durchmesser und eine nach außen weisende Bohrung 56 mit großem Durchmesser, die über Bohrungen 54 und 55 miteinander verbunden sind, gebildet.

Auf der Außenverzahnung 48 der Hülse 46 ist eine verschiebbare ringförmige Schaltmuffe 60 mit einer Innenverzahnung angeordnet. Eine Radialbohrung 62 erstreckt sich durch die Schaltmuffe 60 und nimmt einen Federstift 64 auf, der sich durch die Querbohrung 52 erstreckt. Der Durchmesser der Querbohrung 52 ist größer als der Durchmesser des Federstiftes 64, so daß sich die Schaltmuffe 60 mit dem Federstift 64 relativ zu der Hülse 46 axial verschieben läßt. Die Schaltmuffe 60 enthält eine erste äußere Zahnreihe 66 und eine zweite äußere Zahnreihe 68. Die Bohrung 53 nimmt eine Feder 70 auf, die mit dem Ende der Hülse 46 und dem Federstift 64 in Eingriff steht und vorgespannt ist, um die Schaltmuffe 60 hinsichtlich der Fig. 1 nach rechts, also nach außen zu drücken.

Ein Kolben 71 enthält ein verschiebbar von der Bohrung 53 aufgenommenes Hauptteil 72 und einen Dorn 74, welcher in die Bohrung 54 hineinragt. Eine Kappe 76 ist in der Bohrung 54 eingespannt, um das Hauptteil 72 in der Bohrung 53 zurückzuhalten. An dem Ende des Hauptteils 72 ist eine nicht näher dargestellte Nut eingelassen, in der sich der Federstift 64 abstützt. An dem Ausgangsgehäuse 28 kann eine Schutzkappe 78 durch Schrauben befestigt werden.

Wie aus Fig. 1 hervorgeht, kann in die Hülse 46 ein erster Zapfwellenstummel 80 eingesetzt werden. Der Zapfwellenstummel 80 weist vorzugsweise ein erstes Ende mit einer äußeren Standardverzahnung von 1 3/4 Zoll Durchmesser auf, die für einen Anbaugeräteantrieb bei 1000 U/min verwendet wird. Der Zapfwellenstummel 80 weist ferner einen inneren Bereich mit einem Endabschnitt 84 kleineren Durchmessers, einem Abschnitt 86 mittleren Durchmessers und einem Abschnitt 88 größeren Durchmessers auf. Der Abschnitt 88 größeren Durchmessers enthält eine Außenverzahnung, die mit der Innenverzahnung 50 der Hülse 46 in Eingriff steht. Eine ringförmige Schulter 90, die die Abschnitte 84 und 86 miteinander verbindet, kann mit einer Schulter 92 der Hülse 46 in Eingriff treten, um zu verhindern, daß das innere Ende des Zapfwellenstummels 80 an dem Dorn 74 des Kolbens 71 angreift.

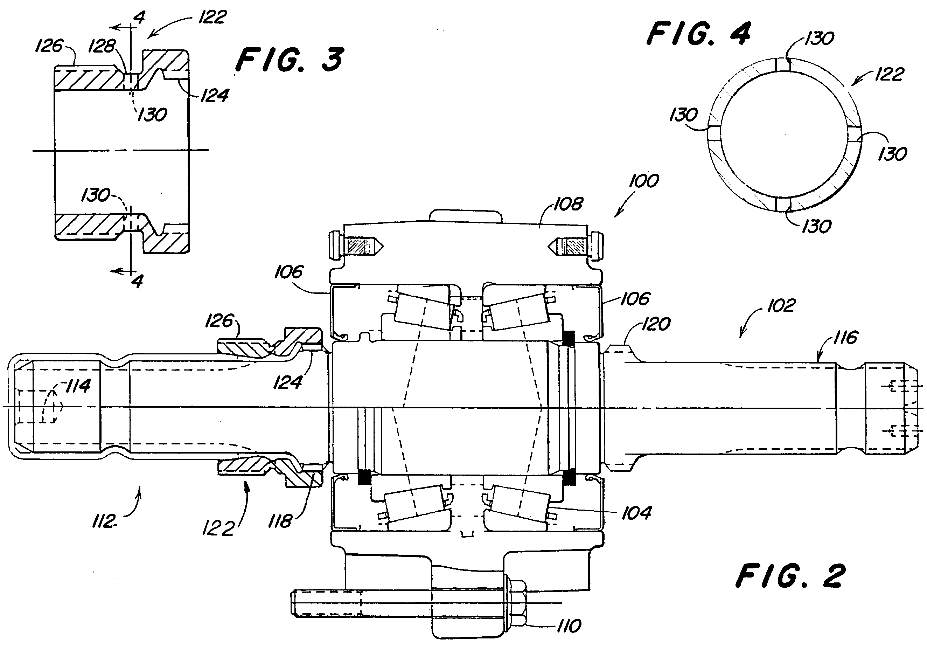

Der Zapfwellenstummel 80 kann aus der Hülse 46 entfernt und durch eine Zapfwellenanordnung 100 ersetzt werden, wie sie in Fig. 2 dargestellt ist. Die Zapfwellenanordnung 100 ist für den Betrieb bei geringeren Leistungsniveaus als der Zapfwellenstummel 80 vorgesehen. Die Zapfwellenanordnung 100 enthält ein Wellenteil 102 mit zwei Funktionsenden. Das Wellenteil 102 wird drehbar von Lagern 104 in einem Lagergehäuse 108 aufgenommen. Die Lager 104 befinden sich zwischen Öldichtungen 106, die ihrerseits in dem Lagergehäuse 108 angeordnet sind. Das Lagergehäuse 108 kann durch vier Schrauben 110 an dem Ausgangsgehäuse 28 festgeschraubt werden. Ein Endabschnitt 112 des Wellenteils 102 ist für den Antrieb bei der Standarddrehzahl von 540 U/min verzahnt und ausgelegt. In das Ende dieses Wellenendabschnitts 112 ist eine mittlere axiale Sackbohrung 114 eingelassen. Der andere Endabschnitt 116 des Wellenteils 102 ist für einen Antrieb bei der Standarddrehzahl von 1000 U/min verzahnt und ausgelegt. An den inneren, d. h. zum mittleren Wellenabschnitt weisenden Bereichen der Wellenendabschnitte 112 und 116 sind jeweils identische Verzahnungen 118 und 120 angeordnet. Das Lagergehäuse 108 ist derart ausgebildet, daß sich das jeweils nach hinten, d. h. in Richtung eines Anbaugerätes, vorstehende Ende der Wellenabschnitte 112 bzw. 116 hinsichtlich der nicht gezeigten Verbindungsteile eines nicht gezeigten Anbaugerätes in einer geeigneten Lage befindet.

Gemäß vorliegender Erfindung ist eine hohle ringförmige Kupplungshülse 122 mit Sollbruchstelle vorgesehen, die eine radial innere für einen Eingriff mit den Verzahnungen 118 und 120 geeignete Verzahnung 124 sowie eine radial äußere für einen Eingriff mit der Innenverzahnung 50 der Hülse 46 geeignete Verzahnung 126 enthält. Wie am besten aus Fig. 3 ersichtlich, weist die Kupplungshülse 122 zwischen den Verzahnungen 124 und 126 einen Halsbereich 128 mit reduziertem Querschnitt auf. Mehrere, vorzugsweise vier auf dem Umfang gleich verteilte Radialbohrungen erstrecken sich durch den Halsbereich 128 der Kupplungshülse 122. Vorzugsweise besteht die Kupplungshülse 122 aus einem Material, welches strukturell schwächer als das Material der anderen beteiligten Komponenten ist. Es handelt sich beispielsweise um Kugelgraphitguß oder 4140 Stahl.

Der Wellenendabschnitt 112 läßt sich in die Hülse 46 einsetzen, wobei die Verzahnung 126 der Kupplungshülse 122 mit der Innenverzahnung 50 der Hülse 46 in Eingriff tritt. In diesem Fall wird von der Welle 12 über das Eingangszahnrad 16, die Schaltmuffe 60 und die Hülse 46 Leistung bei einer Drehzahl von 1000 U/min auf das Wellenteil 102 übertragen.

Auch der andere Wellenendabschnitt 116 läßt sich in die Hülse 46 einsetzen, wobei das Ende des Wellenendabschnitts 116 mit dem Dorn 74 in Eingriff tritt und den Kolben 71, den Federstift 64 und die Schaltmuffe 60 hinsichtlich der Fig. 1 nach links verschiebt, so daß sich die Zahnreihe 66 von der Verzahnung 22 löst und die Zahnreihe 68 mit dem Zahnkranz 44 des Ausgangsantriebszahnrades 40 in Eingriff tritt. In diesem Fall wird von der Welle 12 über das Eingangszahnrad 16, das Nebenwellengetriebeteil 30, das Ausgangsantriebszahnrad 40, die Schaltmuffe 60 und die Hülse 46 Leistung bei einer Drehzahl von 540 U/min auf das Wellenteil 102 übertragen. Damit wird lediglich durch das wahlweise Einsetzen des einen oder anderen Endes des Wellenteils 102 in die Hülse 46 die richtige Antriebsdrehzahl wirksam, indem die Schaltmuffe 60 ihre Lage beibehält oder sich verschiebt.

Wegen des kleineren Durchmessers des Halsbereichs 128 und wegen der Bohrungen 130 häufen sich Defekte, die auf Drehmomentüberschreitungen beruhen, in höherem Maße in der Kupplungshülse 122 als in den Ausgangswellen. Hieraus folgt, daß die Kupplungshülse 122 eher zerbricht als die Ausgangswellen. Die Kupplungshülse 122 zerbricht normalerweise infolge von Rissen, die sich in dem Halsbereich 128 ausbilden und die sich peripher rund um den Halsbereich 128 ausbreiten. Vorzugsweise bleibt solch ein Bruch auf den Halsbereich 128 und nahe der Ebene, die senkrecht zur Mittelachse der Kupplungshülse 122 ausgerichtet ist, begrenzt. Bei einem derartigen lokalisierten Bruch wird kein Drehmoment auf das nach außen weisende Ende des Wellenteils 102 übertragen. Die Drehung des äußeren Endes des Wellenteils 102 wird unterbrochen und Bauteile, die dem Wellenteil 102 nachgeordnet sind, werden vor Beschädigungen geschützt.

Die Kupplungshülse 122 begrenzt nicht das Drehmomentniveau, das angelegt werden kann. Sie begrenzt jedoch die Anzahl der Spitzendrehmomentereignisse, die übertragen werden können. Sie ist, wie bereits erwähnt, derart ausgebildet, daß sie Ermüdungsbeschädigungen in viel höherem Grad akkumuliert, als es bei Materialien, die für die Ausgangswellen oder die Teile des nicht gezeigten Anbaugerätes verwendet werden, der Fall ist. Dies erlaubt es dem Kunden, hohe Drehmomentspitzen beim Ingangsetzen von Anbaugeräten mit hohem Trägheitsmoment oder beim Auskuppeln anderer Geräte zu übertragen. Die Kupplungshülse 122 ist vorzugsweise so ausgelegt, daß sie das Teil ist, das als erstes bricht. Sie warnt damit die Bedienungsperson, daß die Grenzen eines sicheren Betriebs der verwendeten Welle überschritten werden. Die Lebensdauer der Kupplungshülse 122 wird so gewählt, daß mehrere Kupplungshülsen 122 brechen, bevor es zum Brechen einer Welle kommen kann. Wenn die Bedienungsperson fortgesetzt mehrere Kupplungshülsen 122 zerbricht, ist dies ein Hinweis darauf, daß die Leistungsfähigkeit des Anbaugeräteantriebsstranges überschritten wird. Es sollte dann der Antriebsstrang gegen einen anderen mit höherer Drehmomentbelastungsgrenze ausgetauscht werden.

Die Hülsenkonstruktion basiert auf dem Ermüdungsbruchkonzept. Das bedeutet, daß Drehmomentspitzen oberhalb eines bestimmten Niveaus akkumulieren. Beispielsweise ergibt eine hohe Drehmomentspitze den selben Grad an Beschädigung wie viele kleineren Drehmomentspitzen. Die Kupplungshülse ist so ausgelegt, daß für ihren Bruch eine geringere Beschädigungsakkumulation ausreicht als für den Bruch der Wellen.

## Patentansprüche

1. Zapfwellenanordnung für ein Arbeitsfahrzeug mit einem bei unterschiedlichen Drehzahlen und Leistungsniveaus antreibbaren Ausgangsantriebsteil (46), an welches eine Ausgangswelle (80, 102) kuppelbar ist, gekennzeichnet durch eine hohle, zylindrische Kupplungshülse (122), deren einer Endbereich eine Verzahnung (124) trägt, die für den Eingriff mit einer entsprechenden Verzahnung (118, 120) der Ausgangswelle (102) vorgesehen ist, und deren anderer Endbereich eine Verzahnung (126) trägt, die für den Eingriff mit einer entsprechenden Verzahnung (50) des Ausgangsantriebsteils (46) vorgesehen ist, wobei die Kupplungshülse (122) eine Sollbruchstelle enthält.

2. Zapfwellenanordnung nach Anspruch 1, dadurch gekennzeichnet, daß ein mittlerer zwischen den Endbereichen der Kupplungshülse (122) liegender Bereich der Kupplungshülse (122) als Sollbruchstelle ausgebildet ist.

3. Zapfwellenanordnung nach Anspruch 2, dadurch gekennzeichnet, daß der mittlere Bereich der Kupplungshülse (122) einen Halsbereich (128) enthält.

4. Zapfwellenanordnung nach Anspruch 3, dadurch gekennzeichnet, daß der Halsbereich (128) einen geringeren Außendurchmesser aufweist, als die beiden Endbereiche der Kupplungshülse (122).

5. Zapfwellenanordnung nach einem der Ansprüche 1 bis 4, dadurch gekennzeichnet, daß in dem mittleren Bereich der Kupplungshülse (122) wenigstens eine radial ausgerichtete Bohrung (130) enthalten ist.

6. Zapfwellenanordnung nach einem der Ansprüche 1 bis 5, dadurch gekennzeichnet, daß die Ausgangswelle (102) drehbar von einem Lagergehäuse (108) getragen wird, welches an einem Fahrzeugrahmen oder an einem an dem Fahrzeug befestigten Gehäuseteil (28) befestigbar ist.

7. Zapfwellenanordnung nach einem der Ansprüche 1 bis 6, dadurch gekennzeichnet, daß die Sollbruchstelle oder der Halsbereich (128) so ausgelegt ist, daß die Kupplungshülse (122) bei Überlastung an der Sollbruchstelle oder dem Halsbereich (128) auseinanderbricht und eine Drehmomentübertragung auf die Ausgangswelle (102) verhindert.

8. Zapfwellenanordnung nach einem der Ansprüche 1 bis 7, dadurch gekennzeichnet, daß die Sollbruchstelle oder der Halsbereich (128) so ausgelegt ist, daß die Kupplungshülse (122) infolge von Rissen, die sich rund um den Bereich der Sollbruchstelle oder den Halsbereich (128) in Umfangsrichtung ausbilden, auseinanderbricht und eine Drehmomentübertragung auf die Ausgangswelle (102) verhindert, sofern ein vorgebbares an die Kupplungshülse (122) angelegtes Drehmomentenausmaß überschritten wird.

9. Zapfwellenanordnung nach einem der Ansprüche 1 bis 8, dadurch gekennzeichnet, daß die Sollbruchstelle oder der Halsbereich (128) so ausgelegt ist, daß die Kupplungshülse (122) vor der Ausgangswelle (102) auseinanderbricht.
